# EUROPEAN PATENT APPLICATION

(11) **EP 3 680 996 A1**
(43) Date of publication of application: **15.07.2020**
(21) Application number: 18922085.8
(22) Date of filing: 26.11.2018
(51) Int. Cl.: H01R 31/06, H01J 7/00

(54) **HUB HAVING PLUGGABLE MOBILE POWER SUPPLY**

(71) Applicant: Guangdong Gopod Group Co., Ltd., Shenzhen, Guangdong 518108 (CN)
(72) Inventor: The designation of the inventor has not yet been filed
(74) Representative: Ipside
(86) International application number: PCT/CN2018/117464
(87) International publication number: WO 2020/107160

(57) **Abstract**

The present invention falls within the field of video signal conversion, and discloses a hub with a pluggable mobile power supply, the hub comprising the mobile power supply and a hub, wherein the mobile power supply comprises a first connector, a first direct current conversion module, a charging and discharging management module, a second direct current conversion module, a second connector, and an electric cell; and wherein the hub comprises a third connector, a fourth connector, a power supply management module, a fifth connector, a video signal conversion module, and a sixth connector, the second connector being connected to the fourth connector when a power adapter is not connected to the third connector. Because the hub is provided with the fourth connector that may be connected to the mobile power supply, power is supplied by means of the mobile power supply when the hub is not connected to the power adapter, thereby improving the convenience of the hub.

## Description

### Technical Field

The present invention falls within the field of video signal conversion, and in particular to a hub with a pluggable mobile power supply.

### Background of the Invention

A conventional hub comprises a third connector connected to a power adapter and used to switch a third direct current power supply output by the power adapter, a power supply management module used to turn on or turn off the third direct current power supply according to a charging protocol, a fifth connector used to switch the third direct current power supply and a first video signal, a video signal conversion module used to generate a second video signal according to the first video signal, and a sixth connector used to switch the second video signal. Because the hub can supply power only by means of the power adapter, there is a defect of poor convenience.

### Summary of the Invention

The present invention provides a hub with a pluggable mobile power supply, so as to solve the problems that traditional hubs with a pluggable mobile power supply have a low usage efficiency and poor convenience.

The present invention is implemented by a hub with a pluggable mobile power supply, the hub being connected to a notebook computer and a power adapter, and the hub with a pluggable mobile power supply comprising the mobile power supply circuit and a hub,
wherein the mobile power supply comprises:
a first connector used to switch a first direct current power supply or a first power supply;
a first direct current conversion module connected to the first connector and used to generate a second direct current power supply according to the first direct current power supply or generate the first power supply according to a second power supply;
a charging and discharging management module connected to the first direct current conversion module and used to turn on or turn off the second direct current power supply or the second power supply;
a second direct current conversion module connected to the charging and discharging management module and used to generate a fourth power supply according to a third power supply;
a second connector connected to the second direct current conversion module and switching the fourth power supply,
wherein the charging and discharging management module is further used to generate the third power supply according to the second power supply; and
an electric core connected to the charging and discharging management module and used to store electric energy or output the second power supply according to the second direct current power supply;
and wherein the hub comprises:
   a third connector connected to the power adapter and used to switch a third direct current power supply output by the power adapter;
   a fourth connector connected to the third connector and used to switch the third direct current power supply;
   a power supply management module connected to the fourth connector and used to turn on or turn off the third direct current power supply according to a charging protocol;
   a fifth connector connected to the power supply management module and used to switch a first video signal;
   a video signal conversion module connected to the fifth connector and used to generate the first video signal according to a second video signal; and
   a sixth connector connected to the video signal conversion module and the notebook computer and used to switch the second video signal and the third direct current power supply, wherein
the second connector is connected to the fourth connector when the power adapter is not connected to the third connector.

In one of the embodiments, the power supply management module comprises:
a mode control module connected to the third connector and the sixth connector and used to perform charging protocol communication and output a switch signal according to the third direct current power supply; and
a power supply switch module connected to the fourth connector, the mode control module, and the sixth connector and used to turn on or turn off the third direct current power supply according to the switch signal.

In one of the embodiments, the mode control module comprises a mode selection and PD power controller, a first crystal oscillator, a first capacitor, and a second capacitor,
wherein a first power supply terminal of the mode selection and PD power controller is connected to a tenth power supply; a second power supply terminal of the mode selection and PD power controller is connected to an eleventh power supply; a crystal oscillator input terminal of the mode selection and PD power controller is connected to a first terminal of the first crystal oscillator and a first terminal of the first capacitor; a crystal oscillator output terminal of the mode selection and PD power controller is connected to a second terminal of the first crystal oscillator and a first terminal of the second capacitor; a first charging UFP configuration terminal of the mode selection and PD power controller and a second charging UFP configuration terminal of the mode selection and PD power controller jointly constitute an upstream facing port configuration terminal of the mode control module; a first charging DRP configuration terminal of the mode selection and PD power controller and a second charging DRP configuration terminal of the mode selection and PD power controller jointly constitute a dual role port configuration terminal of the mode control module; a first universal input/output terminal of the mode selection and PD power controller, a second universal input/output terminal of the mode selection and PD power controller, a third universal input/output terminal of the mode selection and PD power controller, a fourth universal input/output terminal of the mode selection and PD power controller, a fifth universal input/output terminal of the mode selection and PD power controller, a sixth universal input/output terminal of the mode selection and PD power controller, and a seventh universal input/output terminal of the mode selection and PD power controller jointly constitute a switch signal output terminal of the mode control module; and a ground terminal of the mode selection and PD power controller, a second terminal of the first capacitor, and a second terminal of the second capacitor are jointly connected to a power ground.

In one of the embodiments, when the second connector is connected to the fourth connector, the fourth connector is further used to switch the fourth power supply;
the power supply management module is further used to turn on or turn off the fourth power supply according to the charging protocol; and
the sixth connector is further used to switch the fourth power supply.

In one of the embodiments, the second direct current conversion module comprises:
a second buck-boost module connected to the charging and discharging management module and used to generate a fifth power supply according to the third power supply; and
a second voltage conversion module connected to the second buck-boost module and used to generate the fourth power supply for the fifth power supply.

In one of the embodiments, the mobile power supply further comprises:
a third direct current conversion module connected to the charging and discharging management module and used to generate a seventh power supply according to the sixth power supply; and
a seventh connector connected to the third direct current conversion module and switching the seventh power supply,
wherein the charging and discharging management module is further used to generate the sixth power supply according to the second power supply.

In one of the embodiments, the third direct current conversion module comprises:
a third buck-boost module connected to the charging and discharging management module and used to generate an eighth power supply according to the sixth power supply; and
a third voltage conversion module connected to the third buck-boost module and used to generate the seventh power supply according to the eighth power supply.

In one of the embodiments, the first direct current conversion module comprises:
a first buck-boost module connected to the charging and discharging management module and used to generate a ninth power supply according to the second power supply or generate the second direct current power supply according to a fourth direct current power supply; and
a first voltage conversion module connected to the third buck-boost module and used to generate the fourth direct current power supply according to the first direct current power supply or generate the first power supply according to the ninth power supply.

In one of the embodiments, the hub further comprises:
a USB controller connected to the sixth connector and used to generate a plurality of second USB signals according to a first USB signal or generate the first USB signal according to the plurality of second USB signals; and
a plurality of USB connectors connected to the USB controller and used to switch the second USB signals,
wherein the sixth connector is further used to switch the first USB signal.

In one of the embodiments, the video signal conversion module comprises a DP to HDMI conversion chip, a second crystal oscillator, a third capacitor, a fourth capacitor, a first resistor, a second resistor, a third resistor, a fourth resistor, a fifth resistor, a sixth resistor, a seventh resistor, an eighth resistor, and a ninth resistor,
wherein a first power supply terminal of the DP to HDMI conversion chip is connected to a twelfth power supply; a second power supply terminal of the DP to HDMI conversion chip is connected to a thirteenth power supply; a crystal oscillator input terminal of the DP to HDMI conversion chip is connected to a first terminal of the second crystal oscillator and a first terminal of the third capacitor; a crystal oscillator output terminal of the DP to HDMI conversion chip is connected to a second terminal of the second crystal oscillator and a first terminal of the fourth capacitor; a first positive electrode DP signal of the DP to HDMI conversion chip is connected to a first terminal of the first resistor; a first negative electrode DP signal of the DP to HDMI conversion chip is connected to a first terminal of the second resistor; a second positive electrode DP signal of the DP to HDMI conversion chip is connected to a first terminal of the third resistor; a second negative electrode DP signal of the DP to HDMI conversion chip is connected to a first terminal of the fourth resistor; a third positive electrode DP signal of the DP to HDMI conversion chip is connected to a first terminal of the fifth resistor; a third negative electrode DP signal of the DP to HDMI conversion chip is connected to a first terminal of the sixth resistor; a fourth positive electrode DP signal of the DP to HDMI conversion chip is connected to a first terminal of the seventh resistor; a fourth negative electrode DP signal of the DP to HDMI conversion chip is connected to a first terminal of the eighth resistor; a first positive electrode secondary video signal terminal of the DP to HDMI conversion chip, a first negative electrode secondary video signal terminal of the DP to HDMI conversion chip, a second terminal of the first resistor, a second terminal of the second resistor, a second terminal of the third resistor, a second terminal of the fourth resistor, a second terminal of the fifth resistor, a second terminal of the sixth resistor, a second terminal of the seventh resistor, and a second terminal of the eighth resistor jointly constitute a DP signal terminal of the video signal conversion module; an HDMI hot plug detection terminal of the DP to HDMI conversion chip, a first positive electrode HDMI signal terminal of the DP to HDMI conversion chip, a first negative electrode HDMI signal terminal of the DP to HDMI conversion chip, a second positive electrode HDMI signal terminal of the DP to HDMI conversion chip, a second negative electrode HDMI signal terminal of the DP to HDMI conversion chip, a third positive electrode HDMI signal terminal of the DP to HDMI conversion chip, a third negative electrode HDMI signal terminal of the DP to HDMI conversion chip, a positive electrode HDMI clock signal terminal of the DP to HDMI conversion chip, a negative electrode HDMI clock signal terminal of the DP to HDMI conversion chip, and a first terminal of the ninth resistor jointly constitute an HDMI signal terminal of the video signal conversion module; a second terminal of the ninth resistor is connected to a fifth power supply; and a ground terminal of the DP to HDMI conversion chip is connected to the power ground.

In the embodiments of the present invention, a mobile power supply and a hub are comprised, wherein the mobile power supply comprises a first connector, a first direct current conversion module, a charging and discharging management module, a second direct current conversion module, a second connector, and an electric cell; and wherein the hub comprises a third connector, a fourth connector, a power supply management module, a fifth connector, a video signal conversion module, and a sixth connector, the second connector being connected to the fourth connector when a power adapter is not connected to the third connector. Because the hub is provided with the fourth connector that may be connected to the mobile power supply, power is supplied by means of the mobile power supply when the hub is not connected to the power adapter, thereby improving the convenience of the hub.

### Brief description of the Drawings

In order to more clearly explain the technical invention in the embodiments of the present invention, the drawings used in the description of the embodiments will be briefly introduced below. Obviously, the drawings in the following description show merely some embodiments of the present invention, and those of ordinary skill in the art may still obtain other drawings according to the drawings without any creative effort.
FIG. 1 is a modular structure diagram of a hub with a pluggable mobile power supply, provided in an embodiment of the present invention;
FIG. 2 is a modular structure diagram of a power supply management module in the hub with a pluggable mobile power supply, provided in an embodiment of the present invention;
FIG. 3 is a modular structure diagram of a second direct current conversion module in the hub with a pluggable mobile power supply, provided in an embodiment of the present invention;
FIG. 4 is another modular structure diagram of the hub with a pluggable mobile power supply, provided in an embodiment of the present invention;
FIG. 5 is a modular structure diagram of a third direct current conversion module in the hub with a pluggable mobile power supply, provided in an embodiment of the present invention;
FIG. 6 is a modular structure diagram of a first direct current conversion module in the hub with a pluggable mobile power supply, provided in an embodiment of the present invention;
FIG. 7 is another modular structure diagram of the hub with a pluggable mobile power supply, provided in an embodiment of the present invention; and
FIG. 8 is an exemplary circuit structure diagram of the hub with a pluggable mobile power supply, provided in an embodiment of the present invention.

### Detailed Description of Embodiments

To make the objectives, technical solutions, and advantages of the present invention clearer, the embodiments of the present invention will be further described in detail below in conjunction with the accompanying drawings.

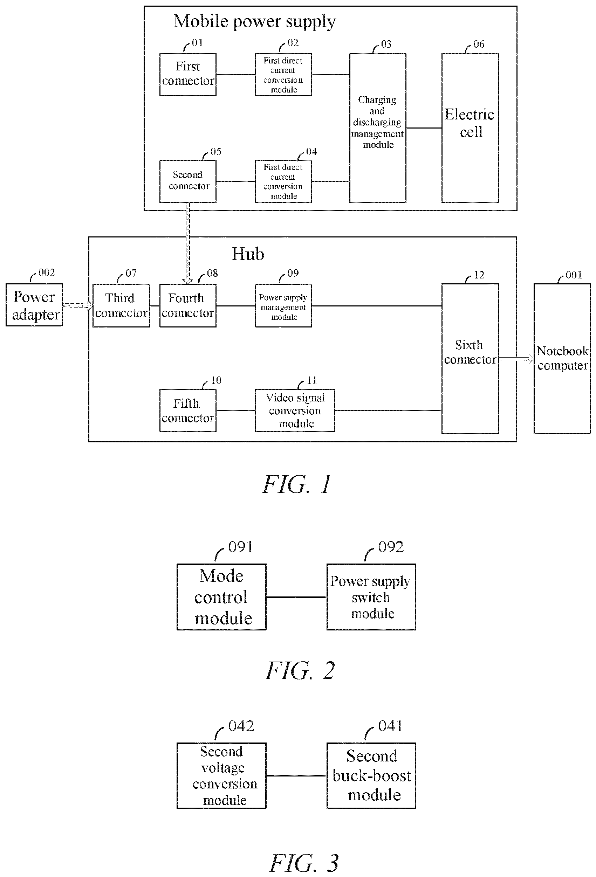

FIG. 1 shows a modular structure of a hub with a pluggable mobile power supply, provided in an embodiment of the present invention, and in order to facilitate illustration, only portions related to this embodiment of the present invention are shown, which is described in detail as follows:
the above-mentioned hub with a pluggable mobile power supply is connected to a notebook computer 001 and a power adapter 002, and comprises the mobile power supply and a hub.

The mobile power supply comprises a first connector 01, a first direct current conversion module 02, a charging and discharging management module 03, a second direct current conversion module 04, a second connector 05, and an electric cell 06.

The first connector 01 is used to switch a first direct current power supply or a first power supply; the first direct current conversion module 02 is connected to the first connector 01 and used to generate a second direct current power supply according to the first direct current power supply or generate the first power supply according to a second power supply; the charging and discharging management module 03 is connected to the first direct current conversion module 02 and used to turn on or turn off the second direct current power supply or the second power supply; the second direct current conversion module 04 is connected to the charging and discharging management module 03 and used to generate a fourth power supply according to a third power supply; the second connector 05 is connected to the second direct current conversion module 04 and switches the fourth power supply; the charging and discharging management module 03 is further used to generate the third power supply according to the second power supply; and the electric cell 06 is connected to the charging and discharging management module 03 and used to store electric energy or output the second power supply according to the second direct current power supply.

The hub comprises a third connector 07, a fourth connector 08, a power supply management module 09, a fifth connector 10, a video signal conversion module 11, and a sixth connector 12.

The third connector 07 is connected to the power adapter 002 and used to switch a third direct current power supply output by the power adapter 002; the fourth connector 08 is connected to the third connector 07 and used to switch the third direct current power supply; the power supply management module 09 is connected to the fourth connector 08 and used to turn on or turn off the third direct current power supply according to a charging protocol; the fifth connector 10 is connected to the power supply management module 09 and used to switch a first video signal; the video signal conversion module 11 is connected to the fifth connector 10 and used to generate the first video signal according to a second video signal; and the sixth connector 12 is connected to the video signal conversion module 11 and the notebook computer 001 and used to switch the second video signal and the third direct current power supply.

The second connector 05 is connected to the fourth connector 08 when the power adapter 002 is not connected to the third connector 07. When the second connector 05 is connected to the fourth connector 08, the fourth connector 08 is further used to switch the fourth power supply; the power supply management module 09 is further used to turn on or turn off the fourth power supply according to the charging protocol; and the sixth connector 12 is further used to switch the fourth power supply.

In specific implementation, the first connector, the second connector 05, the third connector 07, and the sixth connector 12 may be Type-C females, and the fourth connector 08 may be a Type-C male. The electric core 06 may be a lithium electric core. The power adapter 002 may be a PD power adapter. The fifth connector 10 may be an HDMI connector.

A first secondary connector and a second secondary connector sequentially connected may be further comprised between the third connector 07 and the fourth connector 08, wherein the first secondary connector may be a Type-C male, and the second secondary connector may be a USB male.

As shown in FIG. 2, the power supply management module 09 comprises a mode control module 091 and a power supply switch module 092.

The mode control module 091 is connected to the third connector 07 and the sixth connector 12 and used to perform charging protocol communication and output a switch signal according to the third direct current power supply; and the power supply switch module 092 is connected to the fourth connector 08, the mode control module 091, and the sixth connector 12 and used to turn on or turn off the third direct current power supply according to the switch signal.

In specific implementation, the mode control module 091 is used to perform PD3.0 charging protocol communication and output a switch signal according to a third direct current power supply to implement PD power supply management.

As shown in FIG. 3, the second direct current conversion module 04 comprises a second buck-boost module 041 and a second voltage conversion module 042.

The second buck-boost module 041 is connected to the charging and discharging management module 03 and used to generate a fifth power supply according to the third power supply; and the second voltage conversion module 042 is connected to the second buck-boost module 041 and used to generate the fourth power supply for the fifth power supply.

In specific implementation, the second voltage conversion module may comprise a PD3.0 protocol chip, so as to convert the fifth power supply into a fourth power supply complying with a PD3.0 protocol.

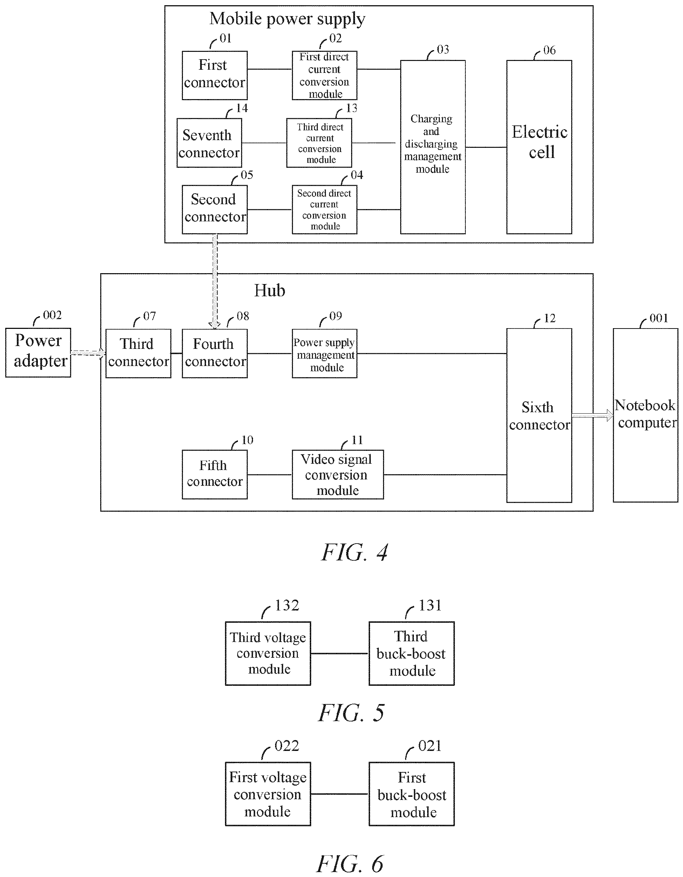

As shown in FIG. 4, the mobile power supply further comprises a third direct current conversion module 13 and a seventh connector 14.

The third direct current conversion module 13 is connected to the charging and discharging management module 03 and used to generate a seventh power supply according to a sixth power supply; and the seventh connector 14 is connected to the third direct current conversion module 13 and switches the seventh power supply. The charging and discharging management module 03 is further used to generate the sixth power supply according to the second power supply.

The seventh connector 14 may be a USB female.

As shown in FIG. 5, the third direct current conversion module 13 comprises a third buck-boost module 131 and a third voltage conversion module 132.

The third buck-boost module 131 is connected to the charging and discharging management module 03 and used to generate an eighth power supply according to the sixth power supply; and the third voltage conversion module 132 is connected to the third buck-boost module 131 and used to generate the seventh power supply according to the eighth power supply.

In specific implementation, the third voltage conversion module may comprise a QC3.0 protocol chip, so as to convert the eighth power supply into a seventh power supply complying with a QC3.0 protocol.

As shown in FIG. 6, the first direct current conversion module 02 comprises a first buck-boost module 021 and a first voltage conversion module 022.

The first buck-boost module 021 is connected to the charging and discharging management module 03 and used to generate a ninth power supply according to the second power supply or generate the second direct current power supply according to a fourth direct current power supply; and the first voltage conversion module 022 is connected to the first buck-boost module 021 and used to generate the fourth direct current power supply according to the first direct current power supply or generate the first power supply according to the ninth power supply.

In specific implementation, the first voltage conversion module may comprise a PD3.0 protocol chip, so as to perform PD3.0 protocol conversion on the first direct current power supply and the ninth power supply.

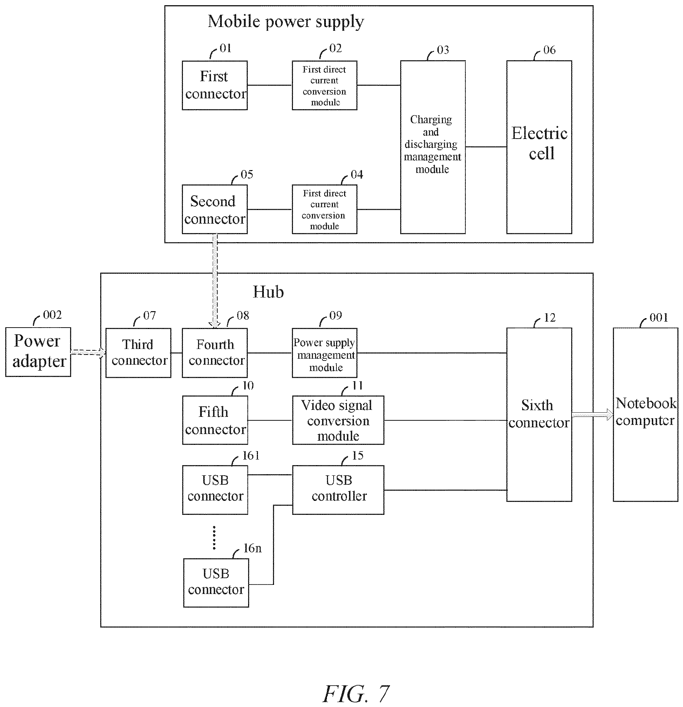

As shown in FIG. 7, the hub further comprises a USB controller 15 and a plurality of USB connectors 16i.

The USB controller 15 is connected to the sixth connector 12 and used to generate a plurality of second USB signals according to a first USB signal or generate the first USB signal according to the plurality of second USB signals; the plurality of USB connectors 16i are connected to the USB controller 15 and used to switch the second USB signals; and the sixth connector 12 is further used to switch the first USB signal.

The hub further comprises the USB controller 15 and the plurality of USB connectors 16i, so that the hub may be externally connected to a plurality of USB devices to implement data communication between the USB devices and the notebook computer.

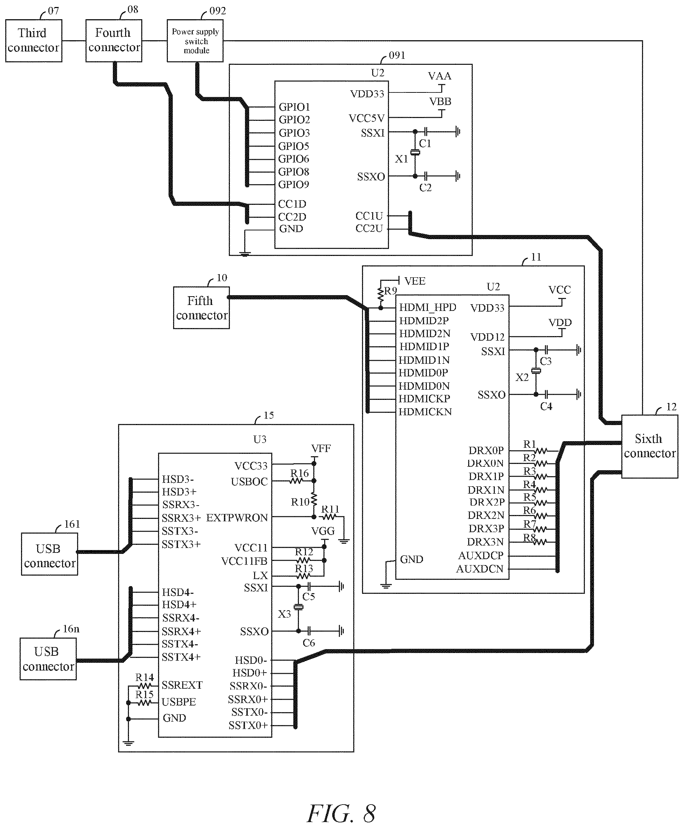

FIG. 8 shows an exemplary circuit structure of a hub with a pluggable mobile power supply, provided in an embodiment of the present invention, and in order to facilitate illustration, only portions related to this embodiment of the present invention are shown, which is described in detail as follows:
the mode control module 091 comprises a mode selection and power delivery (PD) power controller U1, a first crystal oscillator X1, a first capacitor C1, and a second capacitor C2.

A first power supply terminal VDD33 of the mode selection and PD power controller U1 is connected to a tenth power supply VAA; a second power supply terminal VDD5V of the mode selection and PD power controller U1 is connected to an eleventh power supply VBB; a crystal oscillator input terminal SSXI of the mode selection and PD power controller U1 is connected to a first terminal of the first crystal oscillator X1 and a first terminal of the first capacitor C1; a crystal oscillator output terminal SSXO of the mode selection and PD power controller U1 is connected to a second terminal of the first crystal oscillator X1 and a first terminal of the second capacitor C2; a first charging upstream facing port (UFP) configuration terminal CC1U of the mode selection and PD power controller U1 and a second charging UFP configuration terminal CC2U of the mode selection and PD power controller U1 jointly constitute an upstream facing port configuration terminal of the mode control module 091; a first charging dual role port (DRP) configuration terminal CC1D of the mode selection and PD power controller U1 and a second charging DRP configuration terminal CC2D of the mode selection and PD power controller U1 jointly constitute a dual role port configuration terminal of the mode control module 091; a first universal input/output terminal GPIO1 of the mode selection and PD power controller U1, a second universal input/output terminal GPIO2 of the mode selection and PD power controller U1, a third universal input/output terminal GPIO3 of the mode selection and PD power controller U1, a fourth universal input/output terminal GPIO5 of the mode selection and PD power controller U1, a fifth universal input/output terminal GPIO6 of the mode selection and PD power controller U1, a sixth universal input/output terminal GPIO8 of the mode selection and PD power controller U1, and a seventh universal input/output terminal GPIO9 of the mode selection and PD power controller U1 jointly constitute a switch signal output terminal of the mode control module 091; and a ground terminal GND of the mode selection and PD power controller U1, a second terminal of the first capacitor C1, and a second terminal of the second capacitor C2 are jointly connected to a power ground.

The video signal conversion module 11 comprises a display port (DP) to high definition multimedia interface (HDMI) conversion chip U2, a second crystal oscillator X2, a third capacitor C3, a fourth capacitor C4, a first resistor R1, a second resistor R2, a third resistor R3, a fourth resistor R4, a fifth resistor R5, a sixth resistor R6, a seventh resistor R7, an eighth resistor R8, and a ninth resistor R9.

A first power supply terminal VDD33 of the DP to HDMI conversion chip U2 is connected to a twelfth power supply VCC; a second power supply terminal VDD12 of the DP to HDMI conversion chip U2 is connected to a thirteenth power supply VDD; a crystal oscillator input terminal SSXI of the DP to HDMI conversion chip U2 is connected to a first terminal of the second crystal oscillator X2 and a first terminal of the third capacitor C3; a crystal oscillator output terminal SSXO of the DP to HDMI conversion chip U2 is connected to a second terminal of the second crystal oscillator X2 and a first terminal of the fourth capacitor C4; a first positive electrode DP signal DRX0P of the DP to HDMI conversion chip U2 is connected to a first terminal of the first resistor R1; a first negative electrode DP signal DRX0N of the DP to HDMI conversion chip U2 is connected to a first terminal of the second resistor R2; a second positive electrode DP signal DRX1P of the DP to HDMI conversion chip U2 is connected to a first terminal of the third resistor R3; a second negative electrode DP signal DRX1N of the DP to HDMI conversion chip U2 is connected to a first terminal of the fourth resistor R4; a third positive electrode DP signal DRX2P of the DP to HDMI conversion chip U2 is connected to a first terminal of the fifth resistor R5; a third negative electrode DP signal DRX2N of the DP to HDMI conversion chip U2 is connected to a first terminal of the sixth resistor R6; a fourth positive electrode DP signal DRX3P of the DP to HDMI conversion chip U2 is connected to a first terminal of the seventh resistor R7; a fourth negative electrode DP signal DRX3N of the DP to HDMI conversion chip U2 is connected to a first terminal of the eighth resistor R8; a first positive electrode secondary video signal terminal AUXDCP of the DP to HDMI conversion chip U2, a first negative electrode secondary video signal terminal AUXDCN of the DP to HDMI conversion chip U2, a second terminal of the first resistor R1, a second terminal of the second resistor R2, a second terminal of the third resistor R3, a second terminal of the fourth resistor R4, a second terminal of the fifth resistor R5, a second terminal of the sixth resistor R6, a second terminal of the seventh resistor R7, and a second terminal of the eighth resistor R8 jointly constitute a DP signal terminal of the video signal conversion module 11; an HDMI hot plug detection terminal HDMI_HPD of the DP to HDMI conversion chip U2, a first positive electrode HDMI signal terminal HDMID0P of the DP to HDMI conversion chip U2, a first negative electrode HDMI signal terminal HDMID0N of the DP to HDMI conversion chip U2, a second positive electrode HDMI signal terminal HDMID1P of the DP to HDMI conversion chip U2, a second negative electrode HDMI signal terminal HDMID1N of the DP to HDMI conversion chip U2, a third positive electrode HDMI signal terminal HDMID2P of the DP to HDMI conversion chip U2, a third negative electrode HDMI signal terminal HDMID2N of the DP to HDMI conversion chip U2, a positive electrode HDMI clock signal terminal HDMICKP of the DP to HDMI conversion chip U2, a negative electrode HDMI clock signal terminal HDMICKN of the DP to HDMI conversion chip U2, and a first terminal of the ninth resistor R9 jointly constitute an HDMI signal terminal of the video signal conversion module 11; a second terminal of the ninth resistor R9 is connected to a fifth power supply VEE; and a ground terminal GND of the DP to HDMI conversion chip U2 is connected to the power ground.

The USB controller 15 comprises a USB hub controller U3, a third crystal oscillator X3, a fifth capacitor C5, a sixth capacitor C6, s tenth resistor R10, an eleventh resistor R11, a twelfth resistor R12, a thirteenth resistor R13, a fourteenth resistor R14, a fifteenth resistor R15, and a sixteenth resistor R16.

A first power supply terminal VCC33 of the USB hub controller U3, a first terminal of the tenth resistor R10, and a first terminal of the sixteenth resistor R16 are jointly connected to a sixth power supply VFF; a second terminal of the sixteenth resistor R16 is connected to a power supply detection terminal USBOC of the USB hub controller U3; a second terminal of the tenth resistor R10 is connected to a first terminal of the eleventh resistor R11 and an external power supply state terminal EXTPWRON of the USB hub controller U3; a second power supply terminal VCC11 of the USB hub controller U3, a first terminal of the twelfth resistor R12, and a first terminal of the thirteenth resistor R13 are jointly connected to a seventh power supply VGG; the first terminal of the twelfth resistor R12 is connected to a power supply feedback terminal VCC11FB of the USB hub controller U3; the first terminal of the thirteenth resistor R13 is connected to a power supply adjustment terminal LX of the USB hub controller U3; a crystal oscillator input terminal SSXI of the USB hub controller U3 is connected to a first terminal of the third crystal oscillator X3 and a first terminal of the fifth capacitor C5; a crystal oscillator output terminal SSXO of the USB hub controller U3 is connected to a second terminal of the third crystal oscillator X3 and a first terminal of the sixth capacitor C5; a USB2.0 UFP positive electrode signal terminal HSD0+ of the USB hub controller U3, a USB2.0 UFP negative electrode signal terminal HSD0- of the USB hub controller U3, a USB3.1 UFP positive electrode signal receiving terminal SSRX0+ of the USB hub controller U3, a USB3.1 UFP negative electrode signal receiving terminal SSRX0- of the USB hub controller U3, a USB3.1 UFP positive electrode signal transmitting terminal SSTX0+ of the USB hub controller U3, and a USB3.1 UFP negative electrode signal transmitting terminal SSTX0- of the USB hub controller U3 jointly constitute an upstream facing signal terminal of the USB controller 15; a first USB2.0 downstream facing port (DFP) positive electrode signal terminal HSD3+ of the USB hub controller U3, a first USB2.0 DFP negative electrode signal terminal HSD3- of the USB hub controller U3, a first USB3.1 DFP positive electrode signal receiving terminal SSRX3+ of the USB hub controller U3, a first USB3.1 DFP negative electrode signal receiving terminal SSRX3-of the USB hub controller U3, a first USB3.1 DFP positive electrode signal transmitting terminal SSTX3+ of the USB hub controller U3, and a first USB3.1 DFP negative electrode signal transmitting terminal SSTX3- of the USB hub controller U3 jointly constitute a first downstream facing signal terminal of the USB controller 15; a second USB2.0 downstream facing port (DFP) positive electrode signal terminal HSD3+ of the USB hub controller U3, a second USB2.0 DFP negative electrode signal terminal HSD3- of the USB hub controller U3, a second USB3.1 DFP positive electrode signal receiving terminal SSRX3+ of the USB hub controller U3, a second USB3.1 DFP negative electrode signal receiving terminal SSRX3- of the USB hub controller U3, a second USB3.1 DFP positive electrode signal transmitting terminal SSTX3+ of the USB hub controller U3, and a second USB3.1 DFP negative electrode signal transmitting terminal SSTX3-of the USB hub controller U3 jointly constitute a second downstream facing signal terminal of the USB controller 15; a power supply enable terminal USBPE of the USB hub controller U3 is connected to a first terminal of the fifteenth resistor R15; an external resistor SSREXT of the USB hub controller U3 is connected to a first terminal of the fourteenth resistor R14; and a second terminal of the fifth capacitor C5, a second terminal of the sixth capacitor C6, a second terminal of the fourteenth resistor R14, a second terminal of the fifteenth resistor R15, and a ground terminal GND of the USB hub controller U3 are jointly connected to a power ground.

Because the USB controller 15 is a USB3.1 controller and supports a USB3.0 protocol and a USB2.0 protocol, the data transmission rate is enhanced.

What is shown in FIG. 8 will be further described below with reference to a working principle.

In a specific implementation process, when the third connector 07 is connected to the power adapter 002, the third connector 07 and the fourth connector 08 switch the third direct current power supply output by the power adapter 002; the first charging UFP configuration terminal CC1U of the mode selection and PD power controller U1 and the second charging UFP configuration terminal CC2U of the mode selection and PD power controller U1 perform charging protocol communication with the notebook computer 001 by means of the sixth connector 12; the first charging DRP configuration terminal CC1D of the mode selection and PD power controller U1 and the second charging DRP configuration terminal CC2D of the mode selection and PD power controller U1 perform charging protocol communication with the power adapter 002; and the mode selection and PD power controller U1 outputs a switch signal according to a result of the charging protocol communication, so that the power supply switch module 092 turns on or turns off the third direct current power supply according to the switch signal.

When the third connector 07 is not connected to the power adapter 002 and the second connector 05 is connected to the fourth connector 08, the fourth connector 08 switches a fourth power supply output by the mobile power supply; the first charging UFP configuration terminal CC1U of the mode selection and PD power controller U1 and the second charging UFP configuration terminal CC2U of the mode selection and PD power controller U1 perform charging protocol communication with the notebook computer 001 by means of the sixth connector 12; the first charging DRP configuration terminal CC1D of the mode selection and PD power controller U1 and the second charging DRP configuration terminal CC2D of the mode selection and PD power controller U1 perform charging protocol communication with the mobile power supply; and the mode selection and PD power controller U1 outputs a switch signal according to a result of the charging protocol communication, so that the power supply switch module 092 turns on or turns off the fourth power supply according to the switch signal.

The sixth connector 12 switches the fourth power supply.

The sixth connector 12 switches a first video signal; the first positive electrode DP signal DRX0P of the DP to HDMI conversion chip U2, the first negative electrode DP signal DRX0N of the DP to HDMI conversion chip U2, the second positive electrode DP signal DRX1P of the DP to HDMI conversion chip U2, the second negative electrode DP signal DRX1N of the DP to HDMI conversion chip U2, the third positive electrode DP signal DRX2P of the DP to HDMI conversion chip U2, the third negative electrode DP signal DRX2N of the DP to HDMI conversion chip U2, the fourth positive electrode DP signal DRX3P of the DP to HDMI conversion chip U2, the fourth negative electrode DP signal DRX3N of the DP to HDMI conversion chip U2, the first positive electrode secondary video signal terminal AUXDCP of the DP to HDMI conversion chip U2, and the first negative electrode secondary video signal terminal AUXDCN of the DP to HDMI conversion chip U2 accept a second video signal; the DP to HDMI conversion chip U2 generates the first video signal according to the second video signal, and the first video signal is sent to the fifth connector 10 by means of an HDMI signal terminal of the video signal conversion module 11; and the fifth connector 10 switches the first video signal.

The plurality of USB connectors 161 switch second USB signals; and the sixth connector 12 further switches a first USB signal. The upstream facing signal terminal of the USB controller 15 receives or sends a first USB signal; the first downstream facing signal terminal of the USB controller 15 and the second downstream facing signal terminal of the USB controller 15 receive or send a second USB signal; and the USB controller 15 and the USB hub controller U3 generate a plurality of second USB signals according to the first USB signal or generate the first USB signal according to the plurality of second USB signals.

In the embodiments of the present invention, a mobile power supply and a hub are comprised, wherein the mobile power supply comprises a first connector, a first direct current conversion module, a charging and discharging management module, a second direct current conversion module, a second connector, and an electric cell; and wherein the hub comprises a third connector, a fourth connector, a power supply management module, a fifth connector, a video signal conversion module, and a sixth connector, the second connector being connected to the fourth connector when a power adapter is not connected to the third connector. Because the hub is provided with the fourth connector that may be connected to the mobile power supply, power is supplied by means of the mobile power supply when the hub is not connected to the power adapter, thereby improving the convenience of the hub.

The above-mentioned descriptions are merely preferred embodiments of the present invention but not intended to limit the present invention, and any modifications, equivalent replacements, improvements, etc. made within the spirit and principles of the present invention should be included within the scope of protection of the present solution.

## Claims

1. A hub with a pluggable mobile power supply, the hub being connected to a notebook computer and a power adapter, **characterized in that** the hub with a pluggable mobile power supply comprises the mobile power supply circuit and a hub,
wherein the mobile power supply comprises:
a first connector used to switch a first direct current power supply or a first power supply;
a first direct current conversion module connected to the first connector and used to generate a second direct current power supply according to the first direct current power supply or generate the first power supply according to a second power supply;
a charging and discharging management module connected to the first direct current conversion module and used to turn on or turn off the second direct current power supply or the second power supply;
a second direct current conversion module connected to the charging and discharging management module and used to generate a fourth power supply according to a third power supply;
a second connector connected to the second direct current conversion module and switching the fourth power supply, wherein the charging and discharging management module is further used to generate the third power supply according to the second power supply; and
an electric core connected to the charging and discharging management module and used to store electric energy or output the second power supply according to the second direct current power supply;
and wherein the hub comprises:
a third connector connected to the power adapter and used to switch a third direct current power supply output by the power adapter;
a fourth connector connected to the third connector and used to switch the third direct current power supply;
a power supply management module connected to the fourth connector and used to turn on or turn off the third direct current power supply according to a charging protocol;
a fifth connector connected to the power supply management module and used to switch a first video signal;
a video signal conversion module connected to the fifth connector and used to generate the first video signal according to a second video signal; and
a sixth connector connected to the video signal conversion module and the notebook computer and used to switch the second video signal and the third direct current power supply, wherein
the second connector is connected to the fourth connector when the power adapter is not connected to the third connector.

2. The hub with a pluggable mobile power supply of claim 1, **characterized in that** the power supply management module comprises:
a mode control module connected to the third connector and the sixth connector and used to perform charging protocol communication and output a switch signal according to the third direct current power supply; and
a power supply switch module connected to the fourth connector, the mode control module, and the sixth connector and used to turn on or turn off the third direct current power supply according to the switch signal.

3. The hub with a pluggable mobile power supply of claim 1, **characterized in that** the mode control module comprises a mode selection and PD power controller, a first crystal oscillator, a first capacitor, and a second capacitor,
wherein a first power supply terminal of the mode selection and PD power controller is connected to a tenth power supply; a second power supply terminal of the mode selection and PD power controller is connected to an eleventh power supply; a crystal oscillator input terminal of the mode selection and PD power controller is connected to a first terminal of the first crystal oscillator and a first terminal of the first capacitor; a crystal oscillator output terminal of the mode selection and PD power controller is connected to a second terminal of the first crystal oscillator and a first terminal of the second capacitor; a first charging UFP configuration terminal of the mode selection and PD power controller and a second charging UFP configuration terminal of the mode selection and PD power controller jointly constitute an upstream facing port configuration terminal of the mode control module; a first charging DRP configuration terminal of the mode selection and PD power controller and a second charging DRP configuration terminal of the mode selection and PD power controller jointly constitute a dual role port configuration terminal of the mode control module; a first universal input/output terminal of the mode selection and PD power controller, a second universal input/output terminal of the mode selection and PD power controller, a third universal input/output terminal of the mode selection and PD power controller, a fourth universal input/output terminal of the mode selection and PD power controller, a fifth universal input/output terminal of the mode selection and PD power controller, a sixth universal input/output terminal of the mode selection and PD power controller, and a seventh universal input/output terminal of the mode selection and PD power controller jointly constitute a switch signal output terminal of the mode control module; and a ground terminal of the mode selection and PD power controller, a second terminal of the first capacitor, and a second terminal of the second capacitor are jointly connected to a power ground.

4. The hub with a pluggable mobile power supply of claim 1, **characterized in that** when the second connector is connected to the fourth connector, the fourth connector is further used to switch the fourth power supply;
the power supply management module is further used to turn on or turn off the fourth power supply according to the charging protocol; and
the sixth connector is further used to switch the fourth power supply.

5. The hub with a pluggable mobile power supply of claim 1, **characterized in that** the second direct current conversion module comprises:
a second buck-boost module connected to the charging and discharging management module and used to generate a fifth power supply according to the third power supply; and
a second voltage conversion module connected to the second buck-boost module and used to generate the fourth power supply for the fifth power supply.

6. The hub with a pluggable mobile power supply of claim 1, **characterized in that** the mobile power supply further comprises:
a third direct current conversion module connected to the charging and discharging management module and used to generate a seventh power supply according to the sixth power supply; and
a seventh connector connected to the third direct current conversion module and switching the seventh power supply,
wherein the charging and discharging management module is further used to generate the sixth power supply according to the second power supply.

7. The hub with a pluggable mobile power supply of claim 6, **characterized in that** the third direct current conversion module comprises:
a third buck-boost module connected to the charging and discharging management module and used to generate an eighth power supply according to the sixth power supply; and
a third voltage conversion module connected to the third buck-boost module and used to generate the seventh power supply according to the eighth power supply.

8. The hub with a pluggable mobile power supply of claim 1, **characterized in that** the first direct current conversion module comprises:
a first buck-boost module connected to the charging and discharging management module and used to generate a ninth power supply according to the second power supply or generate the second direct current power supply according to a fourth direct current power supply; and
a first voltage conversion module connected to the first buck-boost module and used to generate the fourth direct current power supply according to the first direct current power supply or generate the first power supply according to the ninth power supply.

9. The hub with a pluggable mobile power supply of claim 1, **characterized in that** the hub further comprises:
a USB controller connected to the sixth connector and used to generate a plurality of second USB signals according to a first USB signal or generate the first USB signal according to the plurality of second USB signals; and
a plurality of USB connectors connected to the USB controller and used to switch the second USB signals,
wherein the sixth connector is further used to switch the first USB signal.

10. The hub with a pluggable mobile power supply of claim 1, **characterized in that** the video signal conversion module comprises a DP to HDMI conversion chip, a second crystal oscillator, a third capacitor, a fourth capacitor, a first resistor, a second resistor, a third resistor, a fourth resistor, a fifth resistor, a sixth resistor, a seventh resistor, an eighth resistor, and a ninth resistor,
wherein a first power supply terminal of the DP to HDMI conversion chip is connected to a twelfth power supply; a second power supply terminal of the DP to HDMI conversion chip is connected to a thirteenth power supply; a crystal oscillator input terminal of the DP to HDMI conversion chip is connected to a first terminal of the second crystal oscillator and a first terminal of the third capacitor; a crystal oscillator output terminal of the DP to HDMI conversion chip is connected to a second terminal of the second crystal oscillator and a first terminal of the fourth capacitor; a first positive electrode DP signal of the DP to HDMI conversion chip is connected to a first terminal of the first resistor; a first negative electrode DP signal of the DP to HDMI conversion chip is connected to a first terminal of the second resistor; a second positive electrode DP signal of the DP to HDMI conversion chip is connected to a first terminal of the third resistor; a second negative electrode DP signal of the DP to HDMI conversion chip is connected to a first terminal of the fourth resistor; a third positive electrode DP signal of the DP to HDMI conversion chip is connected to a first terminal of the fifth resistor; a third negative electrode DP signal of the DP to HDMI conversion chip is connected to a first terminal of the sixth resistor; a fourth positive electrode DP signal of the DP to HDMI conversion chip is connected to a first terminal of the seventh resistor; a fourth negative electrode DP signal of the DP to HDMI conversion chip is connected to a first terminal of the eighth resistor; a first positive electrode secondary video signal terminal of the DP to HDMI conversion chip, a first negative electrode secondary video signal terminal of the DP to HDMI conversion chip, a second terminal of the first resistor, a second terminal of the second resistor, a second terminal of the third resistor, a second terminal of the fourth resistor, a second terminal of the fifth resistor, a second terminal of the sixth resistor, a second terminal of the seventh resistor, and a second terminal of the eighth resistor jointly constitute a DP signal terminal of the video signal conversion module; an HDMI hot plug detection terminal of the DP to HDMI conversion chip, a first positive electrode HDMI signal terminal of the DP to HDMI conversion chip, a first negative electrode HDMI signal terminal of the DP to HDMI conversion chip, a second positive electrode HDMI signal terminal of the DP to HDMI conversion chip, a second negative electrode HDMI signal terminal of the DP to HDMI conversion chip, a third positive electrode HDMI signal terminal of the DP to HDMI conversion chip, a third negative electrode HDMI signal terminal of the DP to HDMI conversion chip, a positive electrode HDMI clock signal terminal of the DP to HDMI conversion chip, a negative electrode HDMI clock signal terminal of the DP to HDMI conversion chip, and a first terminal of the ninth resistor jointly constitute an HDMI signal terminal of the video signal conversion module; a second terminal of the ninth resistor is connected to a fifth power supply; and a ground terminal of the DP to HDMI conversion chip is connected to the power ground.
